# EUROPEAN PATENT APPLICATION

(11) **EP 4 815 438 A1**
(43) Date of publication of application: **30.09.2026**
(21) Application number: 25217080.8
(22) Date of filing: 19.11.2025
(51) Int. Cl.: H04N 9/31

(54) **DISPLAY METHOD FOR PROJECTION DEVICE AND PROJECTION DEVICE**

(30) Priority: 27.03.2025 CN 202510380299
(71) Applicant: Anker Innovations Technology Co., Ltd., Changsha, Hunan 410221 (CN)
(72) Inventor: WU, Yong, Changsha City, 410221 (CN)
(74) Representative: Wörz, Volker Alfred

(57) **Abstract**

The present disclosure provides a display method for a projection device and a projection device. The method includes: obtaining (S11) current ambient light information of the projection device and a current projection size of the projection device; determining (S12) a brightness range for the projection device to perform projection based on the current ambient light information and the current projection size, and determining (S12) a color for the projection device to perform projection based on the current ambient light information; obtaining (S13) an HDR source image to be projected, and processing (S13) the HDR source image according to the brightness range and the color to obtain an HDR target image; and projecting and displaying (S14) the HDR target image according to the current projection size. The present disclosure may achieve dynamic environment perception and multi-dimensional parameter coordination optimization during the mapping process, thereby improving display effects and projection quality.

## Description

### TECHNICAL FIELD

The present disclosure relates to the field of display technologies, and more specifically, to a display method for a projection device and a projection device.

### BACKGROUND

High Dynamic Range (HDR) technology enhances image brightness, contrast, and color performance, becoming a core means to improve visual experiences in modern display devices. Currently, mainstream HDR implementations rely on Tone Mapping Operators (TMOs), which dynamically compress the brightness range of HDR source content based on the peak brightness of the target display device to adapt to its physical capabilities. In practice, factors such as environmental changes limit TMO effectiveness, leading to suboptimal display results.

### SUMMARY OF THE DISCLOSURE

According to the embodiments of the present disclosure, a display method for a projection device and a projection device are provided to solve the above problems.

In a first aspect, the present disclosure provides a display method for a projection device, comprising:
obtaining current ambient light information of the projection device and a current projection size of the projection device;
determining a brightness range for the projection device to perform projection based on the current ambient light information and the current projection size, and determining a color for the projection device to perform projection based on the current ambient light information;
obtaining a high dynamic range (HDR) source image to be projected, and processing the HDR source image according to the brightness range and the color to obtain an HDR target image; and projecting and displaying the HDR target image according to the current projection size.

In some embodiments, the determining a brightness range for the projection device to perform projection based on the current ambient light information and the current projection size comprises:
determining a first coefficient of the current ambient light information on a brightness for the projection device to perform projection based on the current ambient light information;
determining a second coefficient of the current projection size on the brightness for the projection device to perform projection based on the current projection size;
determining a brightness adjustment coefficient for the projection device to perform projection based on the first coefficient and the second coefficient; and
determining the brightness range based on the brightness adjustment coefficient and a maximum brightness for the projection device to perform projection.

In some embodiments, the determining a first coefficient of the current ambient light information on a brightness for the projection device to perform projection based on the current ambient light information comprises:
determining the first coefficient based on a product of ambient light intensity in the current ambient light information and a first preset adjustment parameter.

In some embodiments, the determining a second coefficient of the current projection size on the brightness for the projection device to perform projection based on the current projection size comprises:
determining the second coefficient based on a product of the current projection size and a second preset adjustment parameter.

In some embodiments, the determining a color for the projection device to perform projection based on the current ambient light information comprises:
determining a third coefficient of the current ambient light information on the color for the projection device to perform projection based on the current ambient light information; and
determining the color for the projection device to perform projection based on the third coefficient.

In some embodiments, the determining a third coefficient of the current ambient light information on the color for the projection device to perform projection based on the current ambient light information comprises:
determining the third coefficient based on a product of the ambient light intensity in the current ambient light information and a third preset adjustment parameter.

In some embodiments, the determining a brightness range for the projection device to perform projection based on the current ambient light information and the current projection size comprises:
determining the brightness range from a predefined table based on the current ambient light information and the current projection size;
wherein the determining a color for the projection device to perform projection based on the current ambient light information comprises:
   determining the color from the predefined table based on the current ambient light information.

In some embodiments, the obtaining an HDR source image to be projected comprises:
obtaining a HDR video source input to the projection device; and
decoding the HDR video source to generate the HDR source image.

In some embodiments, the processing the HDR source image according to the brightness range and the color to obtain an HDR target image comprises:
mapping brightness information of the HDR source image to the brightness range to perform tone mapping on the HDR source image; and
after the tone mapping, performing color correction on the HDR source image based on the color to obtain the HDR target image.

In a second aspect, the present disclosure provides a projection device, comprising a memory and a processor that are coupled to each other; wherein the processor is configured to execute program instructions stored in the memory to implement operations of the display method as above.

The beneficial effects of the present disclosure are as follows: In the present disclosure, the current ambient light information of the projection device and the current projection size of the projection device are obtained. Based on the current ambient light information and the current projection size, the brightness range for the projection device to perform projection is determined, and the color for the projection device to perform projection is determined based on the current ambient light information. Furthermore, the HDR source image to be projected is obtained, and the HDR source image is processed according to the brightness range and the color to obtain the HDR target image. The HDR target image is then projected and displayed. In this process, the brightness range and the color for the projection device to perform projection are determined based on the current ambient light information and the current projection size, and the HDR source image to be projected is processed and adjusted to obtain the HDR target image projected, thereby achieving dynamic environment perception and multi-dimensional parameter coordination optimization during the mapping process, and thus improving the display effect and projection quality.

### BRIEF DESCRIPTION OF THE DRAWINGS

The following description will further explain the present disclosure with reference to the accompanying drawings and embodiments.
FIG. 1 is a flowchart of a display method for a projection device according to some embodiments of the present disclosure.
FIG. 2 is a curve diagram illustrating the brightness range according to some embodiments of the present disclosure.
FIG. 3 is a curve diagram illustrating the brightness range according to other embodiments of the present disclosure.
FIG. 4 is a structural schematic view of an electronic device according to some embodiments of the present disclosure.

### DETAILED DESCRIPTION

In the present disclosure, the terms "embodiment" mean that the specific features, structures, or characteristics described in the embodiment may be included in at least one embodiment of the present disclosure. The appearance of this term at various locations in the specification does not necessarily refer to the same embodiment, nor does it refer to independent or alternative embodiments that are mutually exclusive from other embodiments. Those skilled in the art will explicitly and implicitly understand that the embodiments described herein may be combined with other embodiments.

The term "and/or" in the present disclosure is merely a descriptive term indicating an associative relationship between associated objects, and may represent three relationships, such as A and/or B, which may indicate: A exists alone, A and B exist together, or B exists alone. Additionally, the character "/" in this document generally indicates that the associated objects before and after it are in an "or" relationship. Furthermore, the term "multiple" in this document refers to two or more. Additionally, the term "at least one" in this document refers to any combination of one or more of multiple options, such as including at least one of A, B, and C, which can mean selecting any one or more elements from the set consisting of A, B, and C. Furthermore, the terms "first," "second," and "third" in the present disclosure are solely for descriptive purposes and should not be interpreted as indicating or implying relative importance or the number of technical features indicated.

To enable those skilled in the art to better understand the technical solutions of the present disclosure, the technical solutions of the present disclosure will be further described in detail below with reference to the accompanying drawings and specific implementation methods.

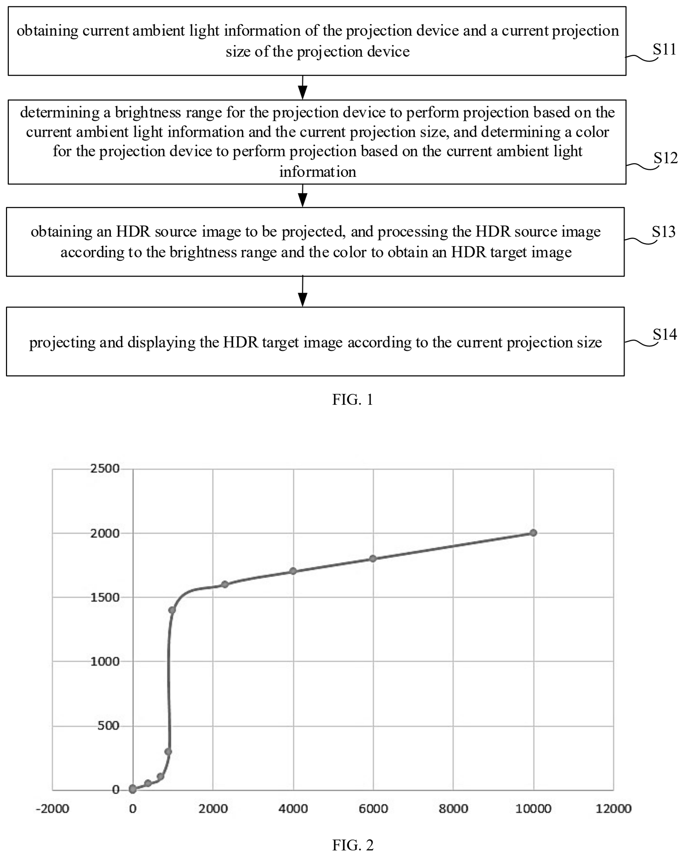

Referring to FIG. 1, FIG. 1 is a flowchart of a display method for a projection device according to some embodiments of the present disclosure. The method may be executed by an electronic device having computing functionality, such as a microcomputer, a server, or mobile devices such as a laptop computer, a tablet computer, or a projector.

It should be noted that when substantially the same results are achieved, the method of the present disclosure is not limited to the flow sequence shown in FIG. 1.

In some implementations, the method may be implemented by a processor invoking computer-readable instructions stored in a memory. The method may include operations at blocks illustrated in FIG. 1.

At block S11: obtaining current ambient light information of the projection device and a current projection size of the projection device.

The projection device may be a display device that converts digital signals into visible light signals through an optical system and projects them onto a screen/white wall. The current ambient light information of the projection device refers to the intensity of external light sources that affect the color of the projected image, such as the current light intensity of the environment in which the projection device is located. This information may be obtained through an ambient light sensor arranged on the projection device. The current projection size of the projection device, such as the display size of the data to be projected, may be obtained through a sensor arranged on the projection device or through settings information of the projection device.

The obtaining current ambient light information of the projection device and a current projection size of the projection device may be implemented by: obtaining the ambient light information E (unit: lux) and the projection size S (unit: square meters) of the projection device.

At block S12: determining a brightness range for the projection device to perform projection based on the current ambient light information and the current projection size, and determining a color for the projection device to perform projection based on the current ambient light information.

The determining a brightness range for the projection device to perform projection based on the current ambient light information and the current projection size may be implemented by: determining the brightness range L for the projection device to perform projection based on multiple current ambient light information E and current projection sizes S, i.e., determining the brightness values for the projection device to perform projection under different ambient light information E and/or different projection sizes S. Furthermore, the determining a color for the projection device to perform projection based on the current ambient light information may be implemented by: determining a color C for the projection device to perform projection based on corresponding ambient light information E. For example, after determining the brightness range, color correction may be performed based on the current ambient light information to ensure the accuracy of the color projected by the projection device under different ambient light/brightness conditions. The color C may be represented as a vector including red, green, and blue (RGB) components.

At block S13: obtaining a high dynamic range (HDR) source image to be projected, and processing the HDR source image according to the brightness range and the color to obtain an HDR target image.

The obtaining an HDR source image to be projected may be implemented by: obtaining metadata of the HDR source image to be projected, where the metadata includes an initial brightness range *Lₛ* and initial color information *Cₛ* of the HDR source image to be projected. Further, the processing the HDR source image according to the brightness range and the color to obtain an HDR target image may be implemented by: adjusting the initial brightness range *Lₛ* and the initial color information *Cₛ* of the HDR source image to be projected based on the brightness range L and the color C of the projection device determined above, thereby obtaining the HDR target image. That is to say, the HDR source image to be projected has an initial brightness range *Lₛ*. When it is projected, the projected image will also have a corresponding brightness range. In this case, by processing it according to the determined brightness range obtained through the above steps, the projected image is ensured to possess the corresponding brightness range.

At block S14: projecting and displaying the HDR target image according to the current projection size.

The projection device projects and displays the HDR target image according to the current projection size. That is, based on the current ambient light information and the current projection size, the adjusted HDR source image is projected and displayed in real time. For example, the projection device projects the HDR target image onto a screen/white wall for display.

In the embodiments, the current ambient light information of the projection device and the current projection size of the projection device are obtained. Based on the current ambient light information and the current projection size, the brightness range for the projection device to perform projection is determined, and the color for the projection device to perform projection is determined based on the current ambient light information. Furthermore, the HDR source image to be projected is obtained, and the HDR source image is processed according to the brightness range and the color to obtain the HDR target image. The HDR target image is then projected and displayed. In this process, the brightness range and the color for the projection device to perform projection are determined based on the current ambient light information and the current projection size, and the HDR source image to be projected is processed and adjusted to obtain the HDR target image projected, thereby achieving dynamic environment perception and multi-dimensional parameter coordination optimization during the mapping process, and thus improving the display effect and projection quality.

In some embodiments, the determining a brightness range for the projection device to perform projection based on the current ambient light information and the current projection size includes: determining a first coefficient of the current ambient light information on a brightness for the projection device to perform projection based on the current ambient light information; determining a second coefficient of the current projection size on the brightness for the projection device to perform projection based on the current projection size; determining a brightness adjustment coefficient for the projection device to perform projection based on the first coefficient and the second coefficient; and determining the brightness range based on the brightness adjustment coefficient and a maximum brightness for the projection device to perform projection.

In some embodiments, the current ambient light information E1 and the current projection size S1 of the projection device are obtained, where the first coefficient *Kₑ* of the current ambient light information E1 on the brightness of the projection device is determined based on the current ambient light information E1, and the second coefficient *Kₛ* of the current projection size S1 on the brightness of the projection device is determined based on the current projection size S1. Further, based on the first coefficient *Kₑ* and the second coefficient *Kₛ*, the brightness adjustment coefficient K for the projection device to perform projection is determined, such as *K=Kₑ* · *Kₛ.* Subsequently, the brightness range L can be determined based on the brightness adjustment coefficient K and the maximum brightness for the projection device to perform projection, where the maximum brightness for the projection device to perform projection is the maximum brightness of the HDR source image to be projected, such as a maximum brightness value recorded in the metadata of a frame of the HDR source image. For example, L = *Lₘ* · *Kₑ* · *Kₛ*, where *Lₘ* refers to the maximum brightness for the projection device to perform projection. It can be understood that the obtained brightness range L for the projection device to perform projection is a numerical value related to the current ambient light information of the projection device and the current projection size of the projection device.

Of course, in some embodiments, the brightness adjustment coefficient K for the projection device to perform projection may be determined based solely on the first coefficient, such as *K=Kₑ*; or it may be determined based solely on the second coefficient, such as K=*Kₛ*. The present disclosure does not make specific limitations in this regard.

In the embodiments of the present disclosure, the first coefficient of the current ambient light information on the brightness for the projection device to perform projection is determined based on the current ambient light information, the second coefficient of the current projection size on the brightness for the projection device to perform projection is determined based on the current projection size, and the brightness adjustment coefficient for the projection device for projection is determined based on the first and second coefficients. Based on the brightness adjustment coefficient and the maximum brightness for the projection device to perform projection, the brightness range is determined, enabling dynamic environmental perception and multi-dimensional parameter optimization during the mapping process, thereby improving display performance and projection quality.

In some embodiments, the determining a first coefficient of the current ambient light information on a brightness for the projection device to perform projection based on the current ambient light information includes: determining the first coefficient based on a product of ambient light intensity in the current ambient light information and a first preset adjustment parameter.

Based on the product of the ambient light intensity in the current ambient light information and the first preset adjustment parameter, the first coefficient of the current ambient light information on the brightness for the projection device to perform projection is determined. In some embodiments, the current ambient light information E1 of the projection device is obtained, and based on the product of the ambient light intensity E and the first preset adjustment parameter alpha in the current ambient light information E1, the first coefficient *Kₑ* is determined. For example, *Kₑ* = 1 + alpha × E, where the adjustment parameter alpha is a preset adjustable parameter that may be determined through actual measurement.

In some embodiments, the determining a second coefficient of the current projection size on the brightness for the projection device to perform projection based on the current projection size includes: determining the second coefficient based on a product of the current projection size and a second preset adjustment parameter.

Based on the product of the current projection size and the second preset adjustment parameter, the second coefficient of the current projection size on the brightness for the projection device to perform projection is determined. In some embodiments, the current projection size information S1 of the projection device is obtained, and based on the product of the current projection size S in the current projection size information S1 and the second preset adjustment parameter beta, the second coefficient is determined. For example, *Kₛ* = 1 + beta * S, where the adjustment parameter beta is a preset adjustable parameter that may be determined through actual measurement.

In some embodiments, based on the current ambient light information E1, the first coefficient *Kₑ* of the current ambient light information on the brightness for the projection device to perform projection is determined based on the current ambient light information E1. For example, *Kₑ* = 1 + alpha * E. Based on the current projection size S1, the second coefficient *Kₛ* of the current projection size on the brightness for the projection device to perform projection is determined based on the current projection size S1. For example, *Kₛ* = 1 + beta * S. Furthermore, based on the first coefficient *Kₑ* and the second coefficient *Kₛ*, the brightness adjustment coefficient K for the projection device to perform projection is determined, for example, K=*Kₑ* · *Kₛ.* Subsequently, the brightness range L can be determined based on the brightness adjustment coefficient K and the maximum brightness for the projection device to perform projection, for example, the brightness range of the projection device *L = Lₘ* · (1 + alpha * E) · (1 + beta * S).

In the embodiments of the present disclosure, the first coefficient is determined based on the product of the ambient light intensity in the current ambient light information and the first preset adjustment parameter, the second coefficient is determined based on the product of the current projection size and the second predetermined adjustment parameter, and then the brightness adjustment coefficient for the projection device to perform projection is determined based on the first coefficient and the second coefficient, such that the brightness range can be determined based on the brightness adjustment coefficient and the maximum brightness for the projection device to perform projection to perform projection, thereby achieving dynamic environment perception and multi-dimensional parameter coordination optimization during the mapping process, and thus improving the display effect and projection quality.

In some embodiments, the determining a color for the projection device to perform projection based on the current ambient light information includes: determining a third coefficient of the current ambient light information on the color for the projection device to perform projection based on the current ambient light information; and determining the color for the projection device to perform projection based on the third coefficient.

The color for the projection device to perform projection may be determined based on the current ambient light information. In some embodiments, based on the current ambient light information E1, the third coefficient *K_{c}* of the current ambient light information E1 on the color for the projection device to perform projection is determined, such as the third coefficient calculated based on the current ambient light information E1. Furthermore, based on the third coefficient gain, the color C for the projection device to perform projection is determined. For example, an original color value of the HDR source image to be projected is C_original. Based on the third coefficient, the original color value C_original is corrected to obtain a corrected color value C_corrected. For example, C_corrected= *K_{c}* * C_original, thereby obtaining the color C for the projection device to perform projection.

In the embodiments, based on the current ambient light information, the third coefficient of the current ambient light information on the color for the projection device to perform projection is determined. Based on the third coefficient, the color for the projection device to perform projection is determined to process the HDR source image according to the brightness range and the color, thereby obtaining the HDR target image. This achieves dynamic environmental perception and multi-dimensional parameter optimization during the mapping process, thereby improving display effects and projection quality.

In some embodiments, the determining a third coefficient of the current ambient light information on the color for the projection device to perform projection based on the current ambient light information includes: determining the third coefficient based on a product of the ambient light intensity in the current ambient light information and a third preset adjustment parameter.

Based on the product of the ambient light intensity in the current ambient light information and the third preset adjustment parameter, the third coefficient of the current ambient light information on the color for the projection device to perform projection is determined. For example, the current ambient light information E1 of the projection device is obtained, the third coefficient *K_{c}* is determined based on the product of the ambient light intensity E and the third preset adjustment parameter gain in the current ambient light information E1. For example, *K_{c} =* 1 + gain * E, where the adjustment parameter gain is a preset adjustable parameter that may be determined through actual measurement, configured to control the influence of ambient light on color. For example, increasing the value of the adjustment parameter gain will make the influence of ambient light more significant, while decreasing the value of the adjustment parameter gain will weaken the influence of ambient light.

Based on the third coefficient *K_{c},* the color for the projection device to perform projection is determined. For example, the original color value C_original of the HDR source image to be projected is corrected based on the third coefficient *K_{c}* to obtain the corrected color value C_corrected, such as C_corrected=(1 + gain * E) ·C_original.

In the embodiments, the third coefficient is determined based on the product of the ambient light intensity in the current ambient light information and the third preset adjustment parameter. Based on the third coefficient, the color for the projection device to perform projection is determined to process the HDR source image according to the brightness range and color, thereby obtaining the HDR target image. This achieves dynamic environmental perception and multi-dimensional parameter optimization during the mapping process, improving display effects and projection quality.

In some embodiments, the determining a brightness range for the projection device to perform projection based on the current ambient light information and the current projection size includes: determining the brightness range from a predefined table based on the current ambient light information and the current projection size; and the determining a color for the projection device to perform projection based on the current ambient light information includes: determining the color from the predefined table based on the current ambient light information.

The predefined table may be a predefined three-dimensional look-up table (LUT), such as the predefined LUT (E, S, *Lₘ*)*,* which includes brightness information and color corresponding to different ambient light intensities E, projection sizes S, and maximum projection brightness *Lₘ*. Multiple brightness ranges L for the projection device to perform projection may be determined based on multiple ambient light information E and projection sizes S, i.e., to determine the brightness values for the projection device to perform projection under different ambient light information E and/or different projection sizes S. For example, the current ambient light information includes multiple brightness levels of multiple ambient light sources. Based on the multiple brightness levels of the multiple ambient light sources and the projection size, multiple brightness levels for the projection device's projection may be determined; these multiple brightness levels constitute the brightness range. Alternatively, for instance, when multiple different current projection sizes exist, based on the current ambient light information and the multiple current projection sizes, multiple brightness levels for the projection device's projection may be determined; these multiple brightness levels constitute the brightness range. After determining the projection brightness values, the color C for the projection device to perform projection may be determined based on the corresponding ambient light information E, and the preset table can be generated by combining the obtained brightness ranges L and colors C.

For example, in a preset table LUT, the range of ambient light intensity E is [0, 1000] lux, with a step size of 100 lux; the range of projection size S is [0.5, 5] square meters, with a step size of 0.5 square meters; the range of maximum projection brightness *Lₘ* is [100, 1000] nits, with a step size of 100 nits. The size of this preset table LUT is (11 × 10 × 10), i.e., it includes 110 elements, each corresponding to the brightness information and color under specific ambient light intensity E, projection size S, and maximum projection brightness.

In some embodiments, the preset table LUT can be shown as follows:

| *Lₘ* (nit) | S (m^2) | E1 (nit) | E2 (nit) | E3 (nit) |
|---|---|---|---|---|
| *Lₘ*1 | S1 | L11/C11 | L21/C21 | L31/C31 |
| *Lₘ*2 | S2 | L12/C12 | L22/C22 | L32/C32 |
| *Lₘ*3 | S3 | L13/C13 | L23/C33 | L33/C33 |

Based on the current ambient light information and the current projection size, the brightness range can be determined from the preset table LUT (E, S, *Lₘ*). For example, based on the current ambient light information E2 and the current projection size S2 of the projection device, as well as the current maximum brightness *Lₘ*2 for the projection device to perform projection, the brightness range L22 can be found in the preset table LUT (E, S, *Lₘ*). In addition, based on the current ambient light information E2, the corresponding color value C22 is determined from the predefined lookup table LUT (E, S, *Lₘ*). Further, based on the brightness range L22 and color C22, the HDR source image to be projected is tone-mapped to obtain the HDR target image. For example, the brightness L for the projection device to perform projection is determined as L=*Lₘ*2+L22, and the color for the projection device to perform projection is determined as C22, thereby obtaining the corresponding HDR target image to be projected.

In some embodiments, the obtaining an HDR source image to be projected includes: obtaining a HDR video source input to the projection device; and decoding the HDR video source to generate the HDR source image.

The obtaining the HDR video source input to the projection device refers to video content captured or produced using high dynamic range (HDR) technology. The decoding the HDR video source to generate the HDR source image may be implemented by: decoding to obtain an original HDR data from the HDR video source, where the data includes luminance and chrominance information; and parsing each frame to obtain corresponding dynamic metadata and static metadata. The metadata includes the initial brightness range and initial color information of the HDR source image, such as the brightness information being Mastering Display: P3, Luminance 0.001-1000 cd/m², where the brightness range of the HDR signal corresponding to Luminance 0.001-1000 cd/m² is 0-1000 nit.

In some embodiments, the processing the HDR source image according to the brightness range and the color to obtain an HDR target image includes: mapping brightness information of the HDR source image to the brightness range to perform tone mapping on the HDR source image; and after the tone mapping, performing color correction on the HDR source image based on the color to obtain the HDR target image.

For example, the current ambient light information E3 of the projection device, the current projection size S3 of the projection device, and the HDR source image to be projected are obtained, thereby obtaining the metadata (HDR metadata) of the HDR source image to be projected. The metadata includes an initial brightness range L3 and an initial color information C3 of the HDR source image to be projected. In some embodiments, the brightness information L3 of the HDR source image is mapped to the brightness range L to perform tone mapping on the HDR source image. Based on the color C3, the color correction is performed on the mapped HDR source image to determine the color C for the projection device to perform projection, thereby obtaining the HDR target image. The brightness range L and the color C of the projection device may be calculated based on the current ambient light information E3 and the current projection size S3, or determined by looking up the predefined table.

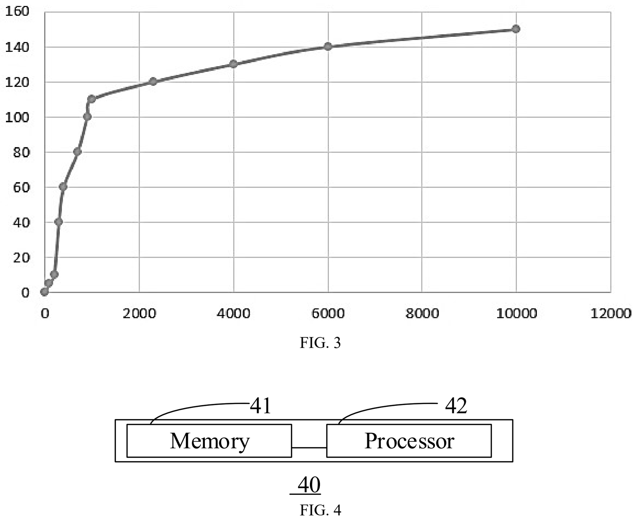

To facilitate understanding, the process of obtaining the HDR target image is illustrated with an example. For example, the initial brightness range *Lₛ* of the HDR signal source includes 0-10000 nit, and the brightness range *Lₜ* for the projection device to perform projection includes 0-5000 nit. Example 1: The initial brightness range *Lₛ* is 10000 nits, and the brightness range *Lₜ* for the projection device to perform projection is 2000 nits. Referring to FIG. 2, FIG. 2 is a curve diagram illustrating the brightness range according to some embodiments of the present disclosure, in which case 12 points are set and mapped separately. Example 2: The initial brightness range *Lₛ* is 10,000 nits, and the brightness range *Lₜ* for the projection device to perform projection is 150 nits. Referring to FIG. 3, FIG. 3 is a curve diagram illustrating the brightness range according to other embodiments of the present disclosure, in which case 12 points are set and mapped separately. By comparison, it can be seen that although the ambient light and projection size have changed, causing the brightness range for the projection device to perform projection to also change, the mapping curve can still be dynamically calibrated to maintain a consistent trend, thereby improving the accuracy of the mapping.

Those skilled in the art will understand that in the above-described method of the specific implementation, the order in which the steps are written does not imply a strict execution order or constitute any limitation on the implementation process. The specific execution order of the steps should be determined based on their functions and possible internal logic.

Referring to FIG. 4, FIG. 4 is a structural schematic view of an electronic device according to some embodiments of the present disclosure. The projection device 40 includes a memory 41 and a processor 42 that are coupled to each other. The processor 42 is configured to execute program instructions stored in the memory 41 to implement the operations of the display method described in the above embodiments. In a specific implementation scenario, the projection device 40 may include but is not limited to: monochrome laser projection devices, mixed-light laser projection devices, and three-color laser projection devices, without limitation. In actual applications, the projection device can determine the brightness range and color of the projection based on current ambient light information and current projection size, and process and adjust the HDR source image to be projected, thereby dynamically adjusting to increase the overall brightness and color saturation of the projected image and enhance the user experience.

Specifically, the processor 42 is configured to control itself and the memory 41 to implement the operations of the display method as described above. The processor 42 may be referred to as a central processing unit (CPU), and the processor 42 may be an integrated circuit chip with signal processing capabilities. The processor 42 may be a general-purpose processor, a digital signal processor (DSP), an application-specific integrated circuit (ASIC), a field-programmable gate array (FPGA), or other programmable logic devices, discrete gates or transistor logic devices, or discrete hardware components. The general-purpose processor may be a microprocessor or any conventional processor, etc. In addition, the processor 42 may be implemented by integrated circuit chips.

In some embodiments, a non-volatile computer-readable storage medium is configured to store computer programs, which are executed by the processor 42 in the embodiments shown in FIG. 4 to implement the operations of the display method described in the above embodiments.

The above description of each embodiment tends to emphasize the differences between the embodiments, and the commonalities or similarities between them may be referred to each other. For the sake of brevity, they are not repeated herein.

In the several embodiments provided in the present disclosure, it should be understood that the disclosed methods and related devices may be implemented by other means. For example, the above-described implementation of the related devices is merely illustrative. For example, the division of modules or units is merely a logical functional division, and in actual implementation, there may be other division methods, such as units or components may be combined or integrated into another system, or some features may be omitted or not executed. Another point is that the coupling or direct coupling or communication disconnection between the elements shown or discussed may be achieved through indirect coupling or communication disconnection via some interfaces, devices, or units, which may be electrical, mechanical, or other forms.

Additionally, in the various embodiments of the present disclosure, the functional units may be integrated into a single processing unit, may exist as separate physical units, or may be integrated into a single unit comprising two or more units. The integrated units may be implemented in hardware form or as software functional units.

When the integrated units are implemented as software functional units and sold or used as independent products, they may be stored on a computer-readable storage medium. Based on this understanding, the technical solution of the present disclosure, in essence or the part that contributes to the prior art, or the entire technical solution or part thereof, may be embodied in the form of a software product. The computer software product is stored on a storage medium and includes a plurality of instructions for causing a computer device (which may be a personal computer, server, or network device, etc.) or a processor to execute all or part of the operations in the various embodiments of the present disclosure. The aforementioned storage medium includes: USB flash drives, external hard drives, read-only memory (ROM), random access memory (RAM), magnetic disks, optical disks, and other media capable of storing program code.

Those skilled in the art will readily understand that numerous modifications and variations may be made to the apparatus and methods while maintaining the teachings of the present disclosure. Therefore, the above disclosure should be considered as limited only by the scope of the appended claims.

## Claims

1. A display method for a projection device, **characterized by** comprising:
obtaining (S11) current ambient light information of the projection device and a current projection size of the projection device;
determining (S12) a brightness range for the projection device to perform projection based on the current ambient light information and the current projection size, and determining (S12) a color for the projection device to perform projection based on the current ambient light information;
obtaining (S13) a high dynamic range, HDR, source image to be projected, and processing (S13) the HDR source image according to the brightness range and the color to obtain an HDR target image; and
projecting and displaying (S14) the HDR target image according to the current projection size.

2. The display method according to claim 1, wherein the determining (S12) a brightness range for the projection device to perform projection based on the current ambient light information and the current projection size comprises:
determining a first coefficient of the current ambient light information on a brightness for the projection device to perform projection based on the current ambient light information;
determining a second coefficient of the current projection size on the brightness for the projection device to perform projection based on the current projection size;
determining a brightness adjustment coefficient for the projection device to perform projection based on the first coefficient and the second coefficient; and
determining the brightness range based on the brightness adjustment coefficient and a maximum brightness for the projection device to perform projection.

3. The display method according to claim 2, wherein the determining a first coefficient of the current ambient light information on a brightness for the projection device to perform projection based on the current ambient light information comprises:
determining the first coefficient based on a product of ambient light intensity in the current ambient light information and a first preset adjustment parameter.

4. The display method according to claim 3, wherein the first coefficient and the ambient light intensity satisfy: *Kₑ* = 1 + alpha × E;
where *Kₑ* refers to the first coefficient, E refers to the ambient light intensity, and alpha refers to the first preset adjustment parameter.

5. The display method according to any one of claims 2-4, wherein the determining a second coefficient of the current projection size on the brightness for the projection device to perform projection based on the current projection size comprises:
determining the second coefficient based on a product of the current projection size and a second preset adjustment parameter.

6. The display method according to claim 5, wherein the second coefficient and the current projection size satisfy: *Kₛ* = 1 + beta * S;
where *Kₛ* refers to the second coefficient, S refers to the current projection size, and beta refers to the second preset adjustment parameter.

7. The display method according to any one of claims 2-6, wherein the brightness range, the brightness adjustment coefficient and the maximum brightness for the projection device to perform projection satisfy: $L = {L}_{m} ⋅ {K}_{e} ⋅ {K}_{s} ;$ where *Kₑ* refers to the first coefficient, *Kₛ* refers to the second coefficient, *Lₘ* refers to the maximum brightness for the projection device to perform projection, and L refers to the brightness range.

8. The display method according to any one of claims 1-7, wherein the determining (S12) a color for the projection device to perform projection based on the current ambient light information comprises:
determining a third coefficient of the current ambient light information on the color for the projection device to perform projection based on the current ambient light information; and
determining the color for the projection device to perform projection based on the third coefficient.

9. The display method according to claim 8, wherein the determining a third coefficient of the current ambient light information on the color for the projection device to perform projection based on the current ambient light information comprises:
determining the third coefficient based on a product of the ambient light intensity in the current ambient light information and a third preset adjustment parameter.

10. The display method according to claim 9, wherein the third coefficient and the ambient light intensity satisfy: *K_{c}* = 1 + gain * E;
where *K_{c}* refers to the third coefficient, E refers to the ambient light intensity, and gain refers to the third preset adjustment parameter.

11. The display method according to claim 1, wherein the determining (S12) a brightness range for the projection device to perform projection based on the current ambient light information and the current projection size comprises:
determining the brightness range from a predefined table based on the current ambient light information and the current projection size;
wherein the determining a color for the projection device to perform projection based on the current ambient light information comprises:
determining the color from the predefined table based on the current ambient light information.

12. The method according to claim 11, wherein the preset table is a three-dimensional look-up table, with dimensional variables including ambient light intensity, projection size, and maximum projection brightness of the projection device.

13. The display method according to any one of claims 1-12, wherein the obtaining (S13) an HDR source image to be projected comprises:
obtaining a HDR video source input to the projection device; and
decoding the HDR video source to generate the HDR source image.

14. The display method according to any one of claims 1-13, wherein the processing (S13) the HDR source image according to the brightness range and the color to obtain an HDR target image comprises:
mapping brightness information of the HDR source image to the brightness range to perform tone mapping on the HDR source image; and
after the tone mapping, performing color correction on the HDR source image based on the color to obtain the HDR target image.

15. A projection device, comprising a memory and a processor that are coupled to each other;
wherein the processor is configured to execute program instructions stored in the memory to implement operations of the display method according to any one of claims 1-14.
